# EUROPÄISCHE PATENTSCHRIFT

(11) **EP 2 770 514 B1**
(45) Veröffentlichungstag und Bekanntmachung des Hinweises auf die Patenterteilung: **31.01.2018**
(21) Anmeldenummer: 13290033.3
(22) Anmeldetag: 20.02.2013
(51) Int. Cl.: H01B 12/16, H02G 3/03, H02G 15/34

(54) **Verfahren zum Kühlen eines supraleitfähigen Kabels**
Method for cooling a superconducting cable
Procédé de refroidissement d'un câble supraconducteur

(43) Veröffentlichungstag der Anmeldung: 27.08.2014
(73) Patentinhaber: Nexans, 92400 Courbevoie (FR)
(72) Erfinder: Marzahn, Erik Dr., 30853 Langenhagen (DE); Stemmle, Mark Dr., 30625 Hannover (DE); West, Beate Dr., 30163 Hannover (DE)
(74) Vertreter: Döring, Roger

(56) Entgegenhaltungen:
- EP-A1- 2 200 047
- EP-A1- 2 200 048
- US-A- 3 800 062
- US-A1- 2005 067 174

## Beschreibung

Die Erfindung bezieht sich auf ein Verfahren zum Kühlen mindestens eines supraleitfähigen Kabels gemäß dem Oberbegriff des Patentanspruchs 1.

Ein solches Verfahren geht beispielsweise aus der EP 2 200 048 A1 hervor.

Ein supraleitfähiges Kabel hat in heutiger Technik elektrische Leiter aus einem Verbundwerkstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise mit seltenen Erden dotierte Materialien, die unter der Bezeichnung ReBCO (Rare-earth-Barium-Kupfer-Oxid) bekannt geworden sind, zu denen insbesondere YBCO (Yttrium-Barium-Kupfer-Oxid) gehört. Ein anderes dieser supraleitfähigen Materialien ist beispielsweise BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Geeignete Kühlmittel sind beispielsweise Stickstoff, Helium, Neon und Wasserstoff oder Gemische dieser Stoffe.

Die US 3,800,062 A beschreibt ein Verfahren zum Betreiben einer Anlage mit supraleitfähigen Kabeln. In der Anlage sind beispielsweise drei supraleitfähige Kabel mit einem rohrförmigen Kern in einem Kryostat angeordnet. Ein von einer Kühlstation geliefertes Kühlmittel wird an einem Ende des Kryostats in denselben eingeleitet und als erwärmtes Kühlmittel vom fernen Ende des Kryostats her durch ein separates Rohr oder einen zweiten Kryostat zur Kühlstation zurückgeführt. Das erwärmte Kühlmittel kann zusätzlich mit einem speziellen Rohrsystem durch Abschnitte der rohrförmigen Kerne der Kabel zurückgeführt werden, die unter Einsatz von Sperren bzw. Stoppern an unterschiedlichen Stellen mit dem separaten Rohr oder dem zweiten Kryostat verbunden sind.

Ein Verfahren, wie es eingangs beschrieben ist, geht beispielsweise aus der EP 2 200 048 A1 hervor. Diese Druckschrift zeigt eine Anordnung mit einem supraleitfähigen Kabel, welches unter Einschluß eines Freiraums zum Durchleiten eines Kühlmittels von einem Kryostat umgeben ist, der aus zwei konzentrisch zueinander angeordneten metallischen Rohren besteht, zwischen denen eine Vakuumisolierung angeordnet ist. In dem Freiraum des Kryostats befindet sich außerdem ein Rohr, durch das ein Kühlmittel, welches am nahen Ende in den Kryostat eingespeist wird, vom fernen Ende der Anordnung her zurückgeführt werden kann. Das Kühlmittel wird auf dem Weg zum fernen Ende der Anordnung bereits im Freiraum des Kryostats wärmer. Eine weitere Erwärmung desselben ergibt sich bei der Rückführung durch das Rohr mit entsprechender Rückwirkung auf das am Einspeisepunkt in den Kryostat eingeführte Kühlmittel. Der Wirkungsgrad der Kühlung wird dadurch insgesamt negativ beeinflußt. Der Erfindung liegt die Aufgabe zugrunde, den Wirkungsgrad des eingangs geschilderten Verfahrens beim Abkühlen des supraleitfähigen Kabels auf Betriebstemperatur zu verbessern.

Diese Aufgabe wird entsprechend den kennzeichnenden Merkmalen des Patentanspruchs 1 gelöst.

Bei Einsatz dieses Verfahrens ist das Kühlmittel voll wirksam, weil es durch äußeren Wärmeeinfall nur unwesentlicherwärmt wird. Das supraleitfähige Kabel kann daher mit hohem Wirkungsgrad so schnell wie möglich auf seine Betriebstemperatur abgekühlt werden. Das Kühlmittel wird dazu durch den vom Kryostat umschlossenen Freiraum geleitet. Es wird aber auch das Kühlmittel bis zum Erreichen der Betriebstemperatur des Kabels zusätzlich durch das rohrförmige Gebilde geleitet, und zwar in der gleichen Richtung wie durch den Freiraum des Kryostats. Das Kühlmittel wird dabei am fernen Ende in die Umgebung abgeleitet. Nach Erreichen der Betriebstemperatur des supraleitfähigen Kabels wird das Kühlmittel vom fernen Ende der Anordnung her durch das rohrförmige Gebilde zum Einspeisepunkt zurückgeführt. Als rohrförmiges Gebilde kann ein rohrförmiger Kern des supraleitfähigen Kabels dienen. Es kann aber auch ein separates Rohr als rohrförmiges Gebilde im Kryostat angeordnet werden.

Das Verfahren nach der Erfindung wird anhand der Zeichnungen in Ausführungsbeispielen erläutert.

Es zeigen:
Fig. 1 schematisch eine Anordnung zur Durchführung des Verfahrens nach der Erfindung.
Fig. 2 und 3 Querschnitte durch zwei unterschiedlich aufgebaute Anordnungen nach Fig. 1.

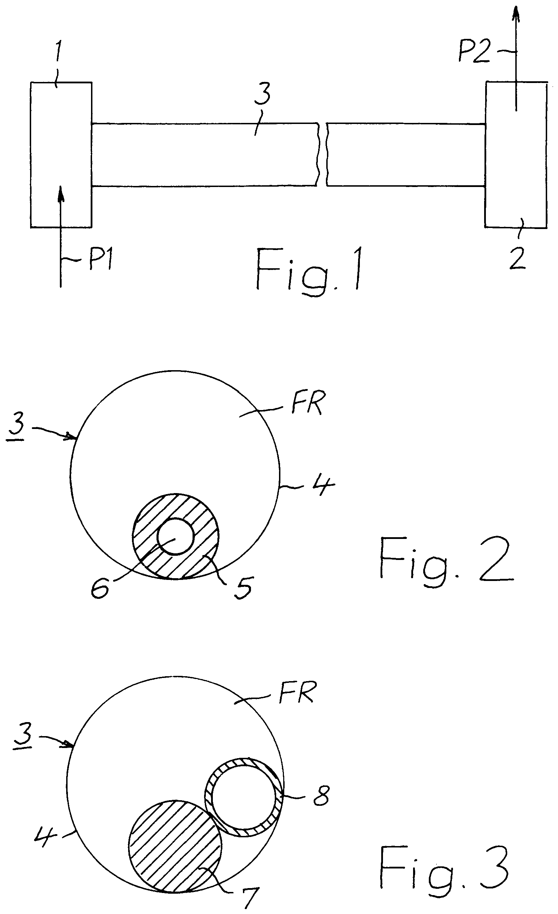

Die in Fig. 1 rein schematisch angedeutete Anordnung weist zwei Endverschlüsse 1 und 2 auf, zwischen denen ein Kryostat 3 angeordnet ist. Der Kryostat 3 umschließt mindestens ein in den Fig. 2 und 3 eingezeichnetes supraleitfähiges Kabel. Der Endverschluß 2 könnte auch eine Verbindungsstelle sein, in welcher zwei mindestens ein supraleitfähiges Kabel enthaltende Kryostate miteinander verbunden sind.

Der Kryostat 3 ist in den Fig. 2 und 3 nur durch einen Kreis 4 angedeutet. Er kann in einer einfachen Ausführungsform ein thermisch isoliertes Rohr sein, das mit Vorteil aus einem Metall besteht, insbesondere aus Edelstahl. Das Rohr kann aber auch aus Kunststoff bestehen. Es ist außen von mindestens einer Schicht aus thermisch wirksamem Isoliermaterial umgeben. In bevorzugter Ausführungsform besteht der Kryostat 3 aus zwei mit Abstand konzentrisch zueinander angeordneten Rohren aus Metall, vorzugsweise aus Edelstahl, zwischen denen sich eine Abstandshalterung und eine Vakuumisolierung befinden. Die Rohre können in beiden Ausführungsformen des Kryostats 3 quer zu ihrer Längsrichtung gewellt sein.

Gemäß Fig. 2 ist in dem Kryostat 3 ein supraleitfähiges Kabel 5 angeordnet, das einen rohrförmigen Kern 6 aufweist. Der Aufbau des Kabels 5 ist in allen möglichen und bekannten Ausführungsformen beliebig. Es wird daher nicht weiter auf diesen Aufbau eingegangen. Der Kryostat 3 umschließt einen Freiraum FR zum Durchleiten eines Kühlmittels, in dem auch das Kabel 5 angeordnet ist. Im Kryostat 3 können auch zwei oder mehr supraleitfähige Kabel angebracht sein, von denen zumindest eins einen rohrförmigen Kern 6 hat.

Das Verfahren nach der Erfindung wird unter Berücksichtigung der Fig. 1 und 2 beispielsweise wie folgt durchgeführt:
Am Endverschluß 1 wird entsprechend dem Pfeil P1 ein Kühlmittel, beispielsweise kaltes Stickstoffgas, in die Anordnung eingespeist und durch den Freiraum FR des Kryostats 3 bis zum Endverschluß 2 geleitet. Dort wird das Kühlmittel entsprechend dem Pfeil P2 in die Umgebung abgeleitet. Diese Arbeitsweise wird so lange durchgeführt, bis das supraleitfähige Kabel 5 auf seine Betriebstemperatur von beispielsweise 77 K abgekühlt ist. Zur Beschleunigung des Abkühlvorgangs ist es zweckmäßig, das Kühlmittel auch durch den Kern 6 zu leiten, und zwar ebenso wie durch den Freiraum FR vom Endverschluß 1 zum Endverschluß 2.

Nach Erreichen der Betriebstemperatur des Kabels 5 wird für dessen weitere Kühlung das Kühlmittel vom Endverschluß 1 zum Endverschluß 2 nur durch den Freiraum FR geleitet und vom Endverschluß 2 her durch den Kern 6 des Kabels 5 zum Endverschluß 1 zurückgeleitet. Es wird dort abgeleitet und wieder auf die für die Abkühlung des supraleitfähigen Kabels 5 benötigte Temperatur abgekühlt.

Bei einer Ausführungsform der Anordnung nach Fig. 3 ist neben einem supraleitfähigen Kabel 7 ein separates Rohr 8 im Kryostat 3 bzw. in dessen Freiraum FR angebracht. Bei Durchführung des Verfahrens nach der Erfindung mit einer Anordnung nach Fig. 3 kann analog zu dem für Fig. 1 geschilderten Verfahren ein Kühlmittel bis zur Abkühlung des Kabels 7 auf seine Betriebstemperatur durch den Freiraum FR und gleichzeitig auch durch das Rohr 8 vom Endverschluß 1 zum Endverschluß 2 geleitet werden. Auch bei dieser Ausführungsform der Anordnung können zwei oder mehr supraleitfähige Kabel im Kryostat 3 angebracht sein. Nach Erreichen der Betriebstemperatur des Kabels 7 wird analog zum für Fig. 2 geschilderten Verfahren das Kühlmittel von dem Endverschluß 2 her durch das Rohr 8 zum Endverschluß 1 zurückgeleitet.

## Patentansprüche

1. Verfahren zum Kühlen mindestens eines supraleitfähigen Kabels (5, 7), das in einem mindestens ein thermisch isoliertes Rohr aufweisenden Kryostat (3) mit einem von dem Rohr umschlossenen Freiraum (FR) angeordnet ist, in dem das Kabel (5, 7) und mindestens ein rohrförmiges Gebilde (6, 8) angeordnet werden und durch welchen ein Kühlmittel von einem an einem Ende befindlichen Einspeisepunkt bis zu einem fernen Ende geleitet wird, **dadurch gekennzeichnet,**
- **daß** das Kühlmittel bis zur Abkühlung des Kabels (5,7) auf seine Betriebstemperatur ausschließlich in einer Richtung durch den vom Kryostat (3) umschlossenen Freiraum (FR) und das rohrförmige Gebilde (6,8) geleitet und am fernen Ende in die Umgebung abgeleitet wird und
- **daß** das Kühlmittel nach Erreichen der Betriebstemperatur vom fernen Ende der Anordnung durch das rohrförmige Gebilde (6,8) zum Einspeisepunkt zurückgeführt wird.

2. Verfahren nach Anspruch 1, **dadurch gekennzeichnet, daß** ein Kabel (5) mit einem als rohrförmiges Gebilde vorgesehenen rohrförmigen Kern (6) verwendet wird, durch den das Kühlmittel nach Erreichen der Betriebstemperatur vom fernen Ende der Anordnung zum Einspeisepunkt zurückgeführt wird.

3. Verfahren nach Anspruch 1, **dadurch gekennzeichnet, daß** neben dem Kabel (7) mindestens ein als rohrförmiges Gebilde dienendes, separates Rohr (8) in dem Kryostat (3) angeordnet wird, durch welches das Kühlmittel nach Erreichen der Betriebstemperatur vom fernen Ende der Anordnung zum Einspeisepunkt zurückgeführt wird.

## Claims

1. A method of cooling of at least one superconductive cable (5,7), which is mounted in a cryostat (3) having at least one thermally insulated pipe, with a free space (FR) surrounded by the pipe, within which the cable (5,7) and at least one tubular structure (6,8) are arranged and through which a cooling agent is conducted from a feeding point located at one end up to a distal end of the cryostat, **characterized in**
- **that** the cooling agent is conducted until the cable is cooled to its temperature of operation exclusively in one direction through the free space (FR) of the cryostat and the tubular structure (6,8) and is discharged to the outside at the distal end, and
- **that** the cooling agent is returned after reaching the temperature of operation from the distal end of the arrangement through the tubular structure (6,8) to the feeding point.

2. Method according to claim 1, **characterized in that** a cable (5) with a tubular core (6) intended as a tubular structure is used, wherein the cooling agent is returned through the core after reaching the temperature of operation from the distal end of the arrangement to the feeding point.

3. Method according to claim 1, **characterized in that** in addition to the cable (7) at least one separate pipe (8) serving as a tubular structure is arranged in the cryostat (3) through which the cooling agent is returned after reaching the temperature of operation from the distal end of the arrangement to the feeding point.

## Revendications

1. Procédé pour refroidir au moins un câble supraconducteur (5, 7) qui est disposé dans un cryostat (3) comportant au moins un tube thermiquement isolé et muni d'un espace libre (FR) enveloppé par le tube, dans lequel sont disposés le câble (5, 7) et au moins une structure tubulaire (6, 8) et à travers lequel un fluide réfrigérant peut être acheminé d'un point d'alimentation se trouvant à une extrémité vers une extrémité distante, **caractérisé en ce**
- **que** le fluide de refroidissement est acheminé exclusivement dans une direction passant par l'espace libre (FR) enveloppée par le cryostat (3) et la structure tubulaire (6, 8) et est expulsé dans l'environnement à l'extrémité distante jusqu'au refroidissement du câble (5, 7) à sa température de fonctionnement, et
- **que** le fluide de refroidissement est réintroduit depuis l'extrémité distante du dispositif au point d'alimentation à travers la structure tubulaire (6, 8) après que la température de fonctionnement a été atteinte.

2. Procédé selon la revendication 1, **caractérisé en ce qu'**il est prévu un câble (5) comportant une âme tubulaire (6) réalisée sous la forme d'une structure tubulaire, à travers laquelle le fluide de refroidissement est réintroduit depuis l'extrémité distante du dispositif au point d'alimentation après que la température de fonctionnement a été atteinte.

3. Procédé selon la revendication 1, **caractérisé en ce qu'**en plus du câble (7), au moins un tube distinct (8) jouant le rôle de structure tubulaire est disposé dans le cryostat (3), à travers lequel le fluide de refroidissement est réintroduit depuis l'extrémité distante du dispositif au point d'alimentation après que la température de fonctionnement a été atteinte.
